# EUROPEAN PATENT SPECIFICATION

(11) **EP 3 150 319 B1**
(45) Date of publication and mention of the grant of the patent: **06.12.2023**
(21) Application number: 15187897.2
(22) Date of filing: 01.10.2015
(51) Int. Cl.: B23C 5/28, B23C 5/00, B23P 15/34

(54) **A TOOL BODY, A MILLING TOOL AND A METHOD FOR MANUFACTURING A TOOL BODY**
WERKZEUGKÖRPER, FRÄSWERKZEUG UND VERFAHREN ZUR HERSTELLUNG EINES WERKZEUGKÖRPERS
CORPS D'OUTIL, OUTIL DE FRAISAGE ET PROCÉDÉ DE FABRICATION D'UN CORPS D'OUTIL

(43) Date of publication of application: 05.04.2017
(73) Proprietor: Sandvik Intellectual Property AB, 811 81 Sandviken (SE)
(72) Inventor: KAKAI, Isak, 802 67 Gävle (SE); LARSSON, Olof, 811 52 Sandviken (SE)
(74) Representative: Sandvik

(56) References cited:
- EP-A1- 0 599 393
- WO-A1-98/55254
- DE-B3-102009 030 587
- GB-A- 2 501 511
- JP-A- H0 740 125
- JP-A- 2000 005 924
- JP-A- 2010 094 748
- US-A- 5 288 186

## Description

### FIELD OF THE INVENTION

The present invention relates to a tool body for a milling tool of the type defined in the preamble of claim 1, a milling tool, and a method for manufacturing a tool body. An example of a milling tool in accordance with the preamble of claim 1 is disclosed by WO 98/55254 A1. The tool body includes an internal coolant passage system for passage of coolant from a machine to which the tool is coupled and to cutting inserts mounted in insert seats provided in the tool body.

### BACKGROUND AND PRIOR ART

Milling tools are used for chip removing machining of workpieces of a variety of different materials, such as metal and composite materials, in a wide range of applications. For cost-efficiency, it is preferable to use a milling tool which comprises on one hand a tool body, and on the other hand detachable and replaceable cutting inserts mounted therein. In recent years, it has been increasingly common to use coolant, in the form of a cooling fluid, during the milling operation in order to be able to increase productivity. Many milling tools and tool bodies available in the market are therefore provided with internal coolant passage systems configured to supply coolant to the cutting edges. Some milling tools are provided with coolant outlets adjacent each of the cutting inserts mounted therein in order to effectively supply coolant to the active cutting edge of each of the cutting inserts. Coolant is primarily used to control heat at the cutting edge, but also assists in chip removal and can prevent re-cutting of chips.

A tool body for a milling tool, having a central rotation axis around which the tool body is rotatable, includes a front end and a rear end, between which an envelope surface extends. The rear end comprises a central recess configured to receive coolant from a spindle of a machine. The rear end of the tool body can be connected directly or via an adaptor to the machine spindle. The rear end with the central recess can be of different types. One common and preferred type is the so called arbor coupling, including a central, relatively large recess, and a groove extending across the central recess. In a transition between the front end and the envelope surface, several insert seats in which cutting inserts can be securely mounted are formed. A chip pocket is provided in front of each insert seat. A coolant passage system for passage of coolant from the central recess to each chip pocket is provided in the tool body.

The coolant passage system usually comprises several coolant passageways extending from the central recess and into the chip pockets, where outlets are provided. Such coolant passageways are relatively long and narrow, partly due to the limited space usually provided behind the insert seats, and partly for the fluid mechanical properties. The coolant passageways are usually produced by drilling from the chip pocket and toward the central recess. However, the length and narrowness of the coolant passageways are unpractical from a manufacturing point of view, since long and narrow holes are difficult to drill. This also restrains the versatility of the coolant passage system, since the coolant passageways cannot be tailored to optimise coolant flow in terms of direction and flow rate. In particular for milling tools in which the cutting inserts are radially tipped in at strongly negative angles, it is difficult to make a coolant passageway extending from the chip pocket to the central recess. Either tool body strength or coolant flow direction and flow characteristics are compromised with such a coolant passage system.

JP5310191 discloses an indexable end mill for deep shoulder milling, also known as an indexable long edge milling cutter, with several rows of detachable cutting inserts and with a coolant passage system comprising several coolant passageways. Each coolant passageway comprises a rear portion extending slightly outward from a bottom of the central recess and forward into the tool body, and a front portion extending from the rear portion and into a chip pocket provided in front of a cutting insert. An outlet is provided in the chip pocket. The design of the coolant passage system with a front portion and a rear portion makes the coolant passage system more versatile, since the front portion can be made to extend at an angle with respect to the rear portion. It is thereby possible to position the outlet of the front portion relatively freely and achieve better possibilities to direct the coolant flow.

However, a problem with the coolant passage system disclosed in JP5310191 is the difficulty to manufacture the narrow rear and front portions such that the portions meet and enable an unobstructed coolant flow. The total extension of the rear and front portions of each coolant passageway necessary to reach each of the chip pockets is also large in comparison with the width of the coolant passageways, making the friction losses in the coolant passage system relatively large.

### SUMMARY OF THE INVENTION

It is a primary objective of the present invention to overcome the above mentioned problems and provide a tool body and a milling tool in which a coolant passage system with reduced friction losses can be manufactured in a cost-efficient manner. A second objective is to provide a cost-efficient and stable method of manufacturing a tool body comprising such a coolant system. The primary objective is achieved by a tool body as defined in claim 1. The wider rear portion can be produced by means of drilling from within the central recess and the narrower front portion can be produced by means of drilling inward, toward the rear portion, from the chip pocket. The wider rear portion makes it easy to join the portions. Furthermore, the width of the rear portion will reduce frictional forces affecting the coolant flow and thereby enable distribution of a larger quantity of coolant per pressure unit.

An additional advantage of the tool body according to the invention is that the wide rear portion reduces the weight of the tool body. This may be achieved without affecting its strength during milling thanks to the location of the rear portion in a region of the tool body where the requirements on material strength are relatively low. A reduction in the amount of material in that region does not negatively affect the performance of the tool body during operation. The reduced weight in turn reduces vibrations during milling and also renders the tool body easier to handle during e.g. mounting of the tool body.

The rear portion extends outward and forward from the central recess, which is here to be understood as a direction which is inclined radially outward, i.e. in relation to a central rotation axis of the tool body, and directed forward, i.e. toward the front end of the tool body. Hence, the rear portion extends in a direction having both a radial and an axial component within a reference system of the tool body. The rear portion, i.e. a longitudinal axis of the rear portion, thus extends outward and forward at an angle of less than 90° with respect to the central rotation axis of the tool body.

The tool body may be formed with a central through-hole centered on the rotation axis and having a front opening in the front end of the tool body. A flange can be provided at a distance from the front end, and the through-hole may have a diameter that is smaller at the front end than at the rear end of the tool body. In the case where the tool body is provided with a through-hole, a cover must be provided later on for preventing leakage of coolant through the front opening. A coupling interface at the rear end of the tool body may include the central recess, but depending on the interface, it may also include other recesses and coupling members. In the case of an arbor coupling, the coupling interface also includes a transverse groove formed at the rear end of the tool body.

That the rear portion is wider than the front portion is here to be interpreted as a dimension of the rear portion transverse to a direction of coolant flow being larger than a corresponding dimension of the front portion. In the case of a circular cross section, the width equals the diameter. In the case of a non-circular cross section, the width can be interpreted as an equivalent diameter, or as the largest distance measured across the portion, transverse to the direction of flow.

The transition between the rear portion and the front portion may be gradual or discrete. Preferably, the transition is gradual, such as in the form of a conical transition, in order to achieve desirable fluid dynamical properties.

According to an embodiment of the invention, the rear portion of said at least one coolant passageway comprises a cylindrical cavity. Preferably, the cylindrical cavity is in the form of a circular cylindrical cavity. The rear portion can thus be easily manufactured by drilling from the central recess in the rear end of the tool body. A cylindrical cavity also has advantageous flow characteristics, in particular in the case of a circular cylindrical cavity.

According to another embodiment of the invention, the front portion of said at least one coolant passageway comprises a cylindrical conduit. Preferably, the cylindrical conduit is in the form of a circular cylindrical conduit. Such a circular cylindrical conduit can be manufactured by drilling from the corresponding chip pocket. A cylindrical conduit also has advantageous flow characteristics, in particular in the case of a circular cylindrical conduit. However, it is not necessary that the front portion comprises a cylindrical conduit. If e.g. the front portion is manufactured by wire electrical discharge machining (WEDM), also conduits of other shapes are possible.

According to the invention, the rear portion has a width of at least twice a width of the front portion. In this way, substantial material savings and weight reductions can be achieved, while the front portion can be made narrow enough to ensure a high coolant speed toward the cutting edge.

According to another embodiment of the invention, the rear portion of said at least one coolant passageway extends at least partly from a side wall of said central recess, which side wall extends along the rotation axis of the tool body. This is advantageous from a manufacturing point of view, as will be further discussed below in connection with the proposed method for manufacturing a tool body. However, depending on the design of the tool body, such as its size and the number of insert seats, it may be preferable to position the rear portion such that it extends from a bottom of the central recess, or at least partly from the bottom. In one embodiment, the rear portion extends entirely from the side wall of said central recess. In other words, its opening is located entirely in the side wall. According to another embodiment of the invention, the rear portion of said coolant passageway has a larger extension in a direction of coolant flow than the front portion of said coolant passageway. A long rear portion leads to a reduced weight of the tool body and advantages associated therewith as previously discussed. The relatively large rear portion also contributes to exertion of a high pressure on coolant located within the front portion and thereby to a higher coolant speed and a more efficient cooling. The front portion should however be long enough to achieve a directed flow of coolant from the outlet.

According to the invention, said coolant passageway comprises at least two separate front portions sharing a common rear portion and extending into the same chip pocket, in which at least two outlets are provided. This is suitable for applications where abundant cooling is desired and/or where it is desired to use the coolant flow for chip control. The front portions may have different widths and/or designs.

According to another embodiment of the invention, the rear portion of the at least one coolant passageway has a width that decreases successively in a direction of coolant flow. The rear portion of said coolant passageway may e.g. comprise at least two sections of different widths, of which a front section has a smaller width than a rear section. The transitions between the sections may be stepwise, but also in the form of e.g. conical transitions or otherwise gradual transitions. Gradual transitions are preferred for their superior flow properties.

According to another embodiment of the invention, the tool body has an increasing diameter toward the front end of the tool body. This is suitable e.g. for a tool body of a face milling tool or a shoulder milling tool.

According to a second aspect of the present invention, the above mentioned primary objective is achieved by means of a milling tool comprising the proposed tool body and at least one cutting insert, wherein each cutting insert is detachably mounted in an insert seat of the tool body. Advantages and advantageous embodiments of such a milling tool correspond to those discussed in connection with the proposed tool body.

According to a third aspect of the present invention, the above mentioned second objective is achieved by means of a method for manufacturing the proposed tool body from a tool body blank, comprising the steps:
- forming a central recess in a rear end of the tool body blank,
- forming the at least one insert seat and the at least one chip pocket in said tool body blank,
- forming the rear portion of said at least one coolant passageway by machining, preferably drilling, from within said central recess,
- forming the front portion of said at least one coolant passageway by machining from within the chip pocket.

With the method according to the invention, the rear portion of the coolant passageway is thus formed by machining, preferably drilling, from within the central recess, while the front portion is formed by machining from the chip pocket. In this way, it is possible to achieve a relatively large rear portion and a relatively short and narrow front portion with the above mentioned associated advantages associated therewith. The largest angle that the rear portion can have with respect to the central rotation axis of the tool body, when drilling the rear portion, is limited by the desired location of the opening on the rear portion in combination with the width of the central recess and the size of the drill. By means of the inventive method, the difficulties associated with producing long and narrow coolant passageways are thereby avoided. At the same time, the weight of the tool body is reduced, while the stability and the strength of the resulting tool body, as well as the fluid mechanical properties of the coolant passage system, are preserved or improved in comparison with previously known tool bodies.

The order in which the steps are performed is not crucial, although it is preferred that the rear portion of the coolant passageway is formed prior to the front portion. Obviously, the step of forming the chip pocket has to be performed before the step of forming the front portion of the coolant passageway, and the step of forming the central recess has to be performed before forming the rear portion.

According to an embodiment of the invention, the method further comprises the step:
- prior to forming said rear portion, forming a bottom surface of said central recess into a cone shaped surface, wherein the step of forming said rear portion comprises using said cone shaped surface as a support surface for supporting a drill tip of a drill used to machine the rear portion.

The use of the cone shaped surface as a support surface simplifies drilling of the rear portion since it prevents the drill from sliding when entering the side wall of the central recess. Thus, this is particularly useful when the rear portions of the coolant passageways are to extend at least partly from the side wall.

According to an embodiment of the invention, the method further comprises the step:
- after forming said rear portion, removing said cone shaped surface.

The central recess can thus, after forming of the coolant passage system, be finished in any way that is desirable depending on application.

According to an embodiment of the invention, drilling is used in the step of forming the front portion of said at least one coolant passageway. This is a cost-efficient way of forming the front portion.

According to another embodiment of the invention, electrical discharge machining (EDM), preferably wire electrical discharge machining (WEDM) is used in the step of forming the front portion of said at least one coolant passageway. EDM, and in particular WEDM, offer the possibility to form very narrow front portions, or front portions with a non-cylindrical shape.

Further advantageous features and advantages of the invention will appear from the following detailed description.

### BRIEF DESCRIPTION OF THE DRAWINGS

The invention will in the following be described by means of example with reference to the appended drawings, in which:
- Fig. 1: is a perspective view showing a tool according to a first embodiment of the invention;
- Fig. 2: is another perspective view of the tool in fig. 1;
- Fig. 3: is a front end view of the tool body shown in fig. 1;
- Fig. 4: is a side view of the tool in fig. 1;
- Fig. 5: is a cross section taken along the line V-V in fig. 4;
- Fig. 6: is a perspective view showing a tool according to a second embodiment of the invention;
- Fig. 7: is a side view of the tool in fig. 6;
- Fig. 8: is a cross section taken along the line VIII-VIII in fig. 7; and
- Fig. 9: is a flow chart schematically illustrating a method according to the invention.

### DETAILED DESCRIPTION OF EMBODIMENTS OF THE INVENTION

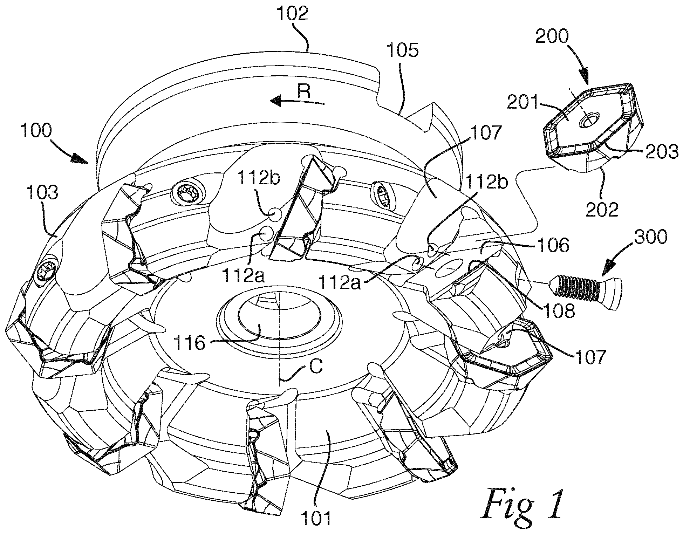

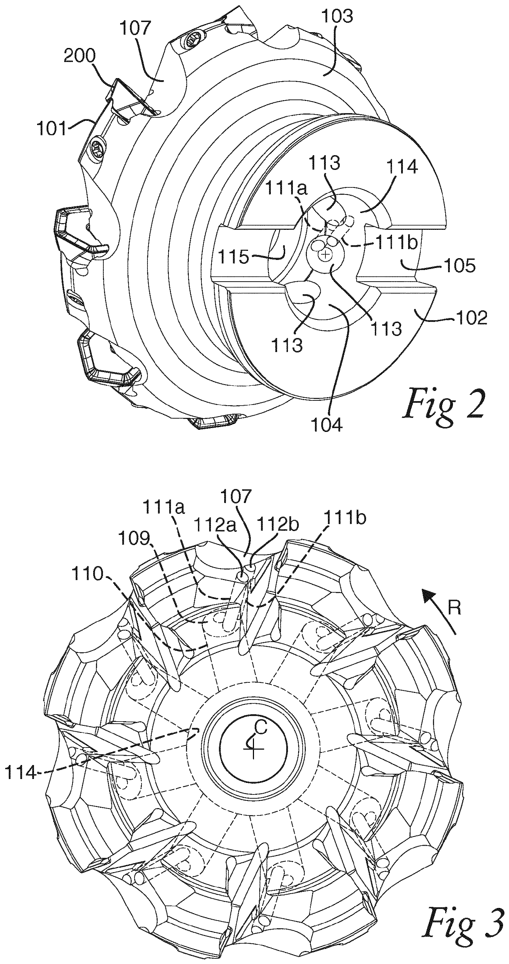

A milling tool configured for face milling according to a first embodiment of the present invention is shown in fig. 1-5. The tool includes a tool body 100 according to an embodiment of the invention, several detachable and indexable cutting inserts 200, and fastening members 300 in the form of screws. The tool body 100 has a central rotation axis C around which the tool body is rotatable in a direction of rotation R. It includes a front end 101 and a rear end 102, and an envelope surface 103 extending between the front end 101 and the rear end 102. The tool body 100 has a waist and an increasing diameter toward the front end 101. In the rear end, as shown in fig. 2, a coupling interface for coupling the milling tool to a machine (not shown) is provided. The coupling interface is in the form of an arbor coupling including a central recess 104 and a transverse groove 105 configured to engage with a spindle of the machine via an adaptor. A central through-hole 116 extends around and along the central rotation axis C from a bottom 115 of the central recess 104, which bottom 115 is in the form of a circular shelf, and toward a front opening in the front end 101 of the tool body 100. The through-hole 116 has a diameter which is smaller than a diameter of the central recess 104.

In a transition between the front end 101 and the envelope surface 103, a number of insert seats 106 are formed in the tool body 100. In the shown embodiment, eight insert seats 106 are provided. In front of each insert seat 106 in the direction of rotation R, a chip pocket 107 is provided. A cutting insert 200 is mounted in each insert seat 106 with an upper side 201 comprising a rake face and with a lower side 202 facing the insert seat 106. The cutting inserts 200 are mounted in the insert seats 106 by means of clamping using the fastening members 300. Each fastening member presses against the lower side 202 of one of the cutting inserts 200, such that a top support member 107 provided in front of the insert seat 106 in the tool body contacts the upper side 201 of the cutting insert 200 and such that a locking groove (not shown) in the lower side 202 of the cutting insert 200 engages with a locking member 108 provided in the insert seat of the tool body 100. Each cutting insert 200 is indexable and has an active cutting edge 203.

The tool body 100 further comprises a coolant passage system for passage of coolant from the central recess 104 to each chip pocket 107. The coolant passage system comprises several internal coolant passageways 109 as shown with hidden (dashed) lines in fig. 3. Each coolant passageway 109 comprises a rear portion 110 in the form of a circular cylindrical cavity extending outward and forward from the central recess 104 and into the tool body 100. In front of the rear portion 110, the coolant passageway 109 comprises two front portions 111a, 111b in the form of circular cylindrical conduits. The front portions 111a, 111b of each coolant passageway 109 extend from the rear portion 109 and into one of the chip pockets 107, in which two outlets 112a, 112b are provided. The front portions 111a, 111b are relatively narrow and short in comparison with the corresponding rear portion 110 and extend at an angle with respect to the rear portion 110.

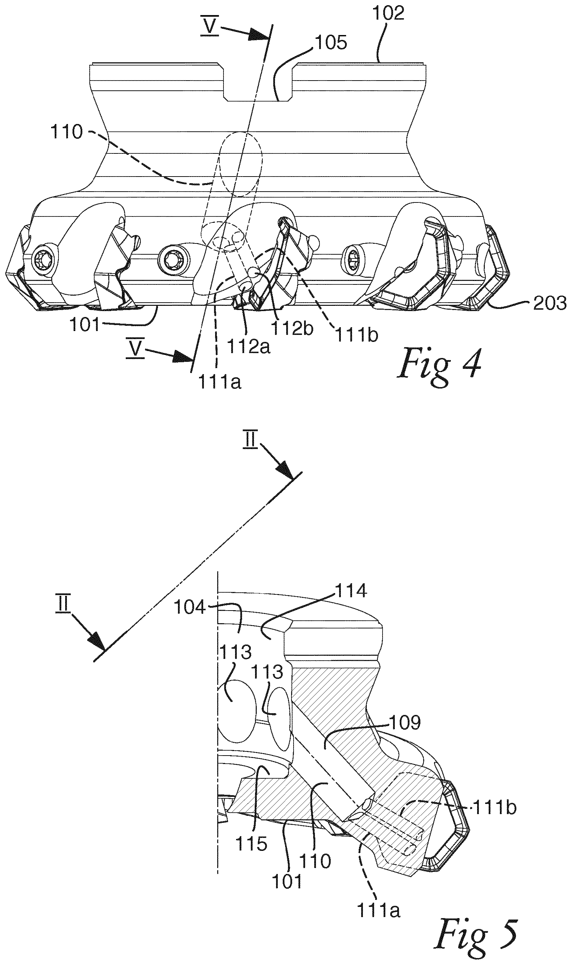

As shown in fig. 5, the rear portions 110 of the coolant passageways 109 have an opening 113 in a side wall 114 of the central recess 104. During operation, coolant flows from the spindle of the machine and into the coolant passageways 109 through the openings 113. Coolant exits the coolant passageways 109 through the outlets 112a, 112b and is thereby directed toward the active cutting edge 203 of the cutting insert 200. A cover (not shown) is placed over the front opening of the through-hole 116, so that coolant leakage is prevented.

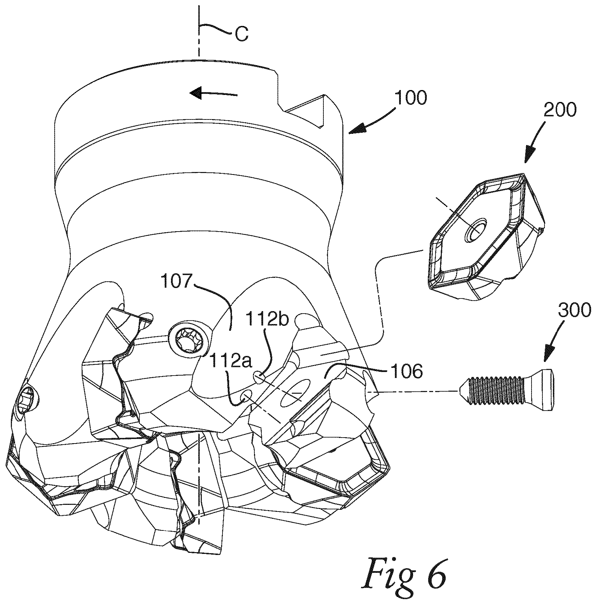

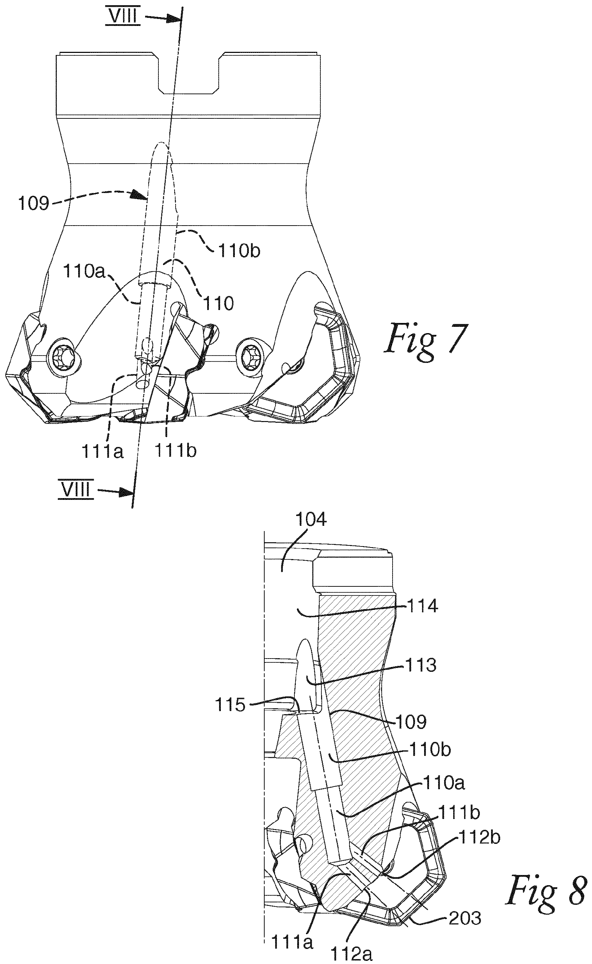

A milling tool configured for face milling according to a second embodiment of the present invention is shown in fig. 6-8. It is to be noted that the same reference sign designates the same or a similar element in all embodiments disclosed. The tool according to the embodiment shown in fig. 6 differs from the tool according to the first embodiment in that it has a smaller diameter, and thereby also comprises a smaller number of cutting inserts 200 mounted in insert seats 106 provided in the tool body 100. The fastening mechanism using fastening members 300 is the same as in the first embodiment. Also the coupling interface is similar, including a central recess 104 with a side wall 114 and a bottom 115 in the form of a circular shelf.

The tool body according to the second embodiment is also provided with a coolant passage system comprising several coolant passageways 109. In this embodiment, each coolant passageway 109 has a rear portion 110 comprising a front section 110a and a rear section 110b, wherein the front section 110a has a smaller diameter than the rear section 110b. From the front section 110a, two front portions 111a, 111b extends toward one of the chip pockets 107 provided in the tool body 100. Two outlets 112a, 112b are provided in the chip pocket 107, directed toward an active cutting edge 203 of the cutting insert 200.

The rear section 110b in this embodiment has an opening 113 formed partly in the side wall 114 and partly in the bottom 115, i.e. in a transition between the side wall 114 and the bottom 115. The rear section 110b and the front section 110a are both in the form of circular cylindrical cavities sharing a common longitudinal axis. The front portions 111a, 111b extend at an angle with respect to this longitudinal axis.

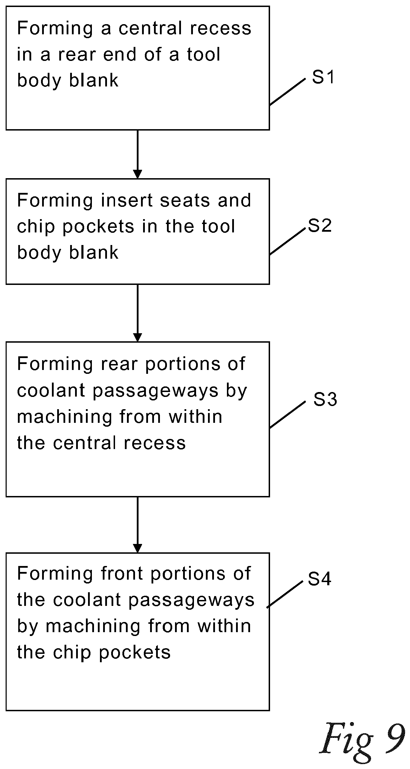

A method for manufacturing a tool body 100 according to an embodiment of the invention from a tool body blank is schematically illustrated in fig. 9. In a step S1, a central recess is formed in a rear end of the tool body blank using a suitable machining technique, or a combination of machining techniques, such as drilling, milling and/or boring. The central recess formed in this step may not be identical to the final central recess 104 of the finished tool body 100. According to a preferred embodiment of the invention, a bottom surface of the central recess formed in step S1 is formed into a cone shaped surface.

In a step S2, insert seats 106 and chip pockets 107 are formed in the tool body blank, also using a suitable machining technique such as milling. The order of the steps S1 and S2 is not relevant and may therefore be reversed if more convenient.

In a step S3, the rear portions 110 of the coolant passageways 109 are formed by machining, preferably drilling, from within the central recess. In the case where the bottom surface has been formed into a cone shaped surface, this surface can be used as a support surface for supporting the drill during the drilling operation, and in particular upon entry of the drill into the tool body blank. The cone shaped surface is removed after forming the rear portions 110, such that the central recess 104 obtains it final shape.

In a step S4, which is preferably carried out after step S3, the front portions 111a, 111b of the coolant passageways 109 are formed by machining from within the chip pockets 107. This can be done either by drilling or by electrical discharge machining (EDM), such as wire electrical discharge machining (WEDM).

The invention is of course not limited to the embodiments disclosed, but may be varied and modified within the scope of the following claims. For example, the number of front portions provided in each coolant passageway may vary depending on application, as well as the shape and width of the front portions and rear portions, respectively. The tool body may comprise several insert seats, of which not all of the insert seats need to be provided in a transition between the front end and the envelope surface. If the tool body is intended for a deep shoulder milling tool also known as a long edge milling tool, it is possible to have insert seats provided around a periphery of the tool body, in an area between the front end and the rear end. Of course, the shape of the cutting inserts may be varied as well as the number of cutting inserts.

## Claims

1. A tool body (100) for a milling tool having a central rotation axis (C) around which the tool body (100) is rotatable, including:
- a front end (101),
- a rear end (102) comprising a central recess (104) configured to receive coolant from a spindle of a machine,
- an envelope surface (103) extending between the front end (101) and the rear end (102) of the tool body (100),
- at least one insert seat (106) in which a cutting insert (200) can be securely mounted formed in a transition between the front end (101) and the envelope surface (103),
- a chip pocket (107) provided in front of each insert seat (106),
- a coolant passage system for passage of coolant from the central recess (104) to each chip pocket (107), comprising at least one coolant passageway (109), said coolant passageway (109) comprising a rear portion (110) extending outward and forward into the tool body (100) from the central recess (104), and a front portion (111a, 111b) extending from the rear portion (110, 110a, 110b) and into said chip pocket (107), in which an outlet (112a, 112b) is provided, wherein the rear portion (110) of said at least one coolant passageway (109) is wider than the front portion (111a, 111b) of said coolant passageway (109), and wherein the rear portion (110) has a width of at least twice a width of the front portion (111a, 111b), ***characterised in* that** said coolant passageway (109) comprises at least two separate front portions (111a, 111b) sharing a common rear portion (110) and extending into the same chip pocket (107), in which at least two outlets (112a, 112b) are provided.

2. The tool body according to claim 1, wherein the rear portion (110) of said at least one coolant passageway (109) comprises a cylindrical cavity, preferably a circular cylindrical cavity.

3. The tool body according to claim 1 or 2, wherein the front portion (111a, 111b) of said at least one coolant passageway (109) comprises a cylindrical conduit, preferably a circular cylindrical conduit.

4. The tool body according to any one of the preceding claims, wherein the rear portion (110) of said at least one coolant passageway (109) extends at least partly from a side wall (114) of said central recess (104), which side wall (114) extends along the rotation axis (C) of the tool body (100).

5. The tool body according to any one of the preceding claims, wherein the rear portion (110) of said coolant passageway (109) has a larger extension in a direction of coolant flow than the front portion (111a, 111b) of said coolant passageway (109).

6. The tool body according to any one of the preceding claims, wherein the rear portion (110) of the at least one coolant passageway (109) has a width that decreases successively in a direction of coolant flow.

7. The tool body according to any one of the preceding claims, wherein the tool body (100) has an increasing diameter toward the front end (101) of the tool body (100).

8. A milling tool comprising a tool body (100) according to any one of the preceding claims and at least one cutting insert (200), wherein the cutting insert (200) is detachably mounted in an insert seat (106) of the tool body (100).

9. A method for manufacturing a tool body (100) according to any one of claims 1-7 from a tool body blank, comprising the steps:
- forming a central recess in a rear end of the tool body blank,
- forming the at least one insert seat (106) and the at least one chip pocket (107) in said tool body blank,
- forming the rear portion (110) of said at least one coolant passageway (109) by machining, preferably drilling, from within said central recess,
- forming the front portion (111a, 111b) of said at least one coolant passageway (109) by machining from within the chip pocket (107).

10. The method according to claim 9, further comprising the step:
- prior to forming said rear portion (110), forming a bottom surface of said central recess into a cone shaped surface, wherein the step of forming said rear portion (110) comprises using said cone shaped surface as a support surface for supporting a drill tip of a drill used to machine the rear portion (110).

11. The method according to claim 10, further comprising the step:
- after forming said rear portion (110), removing said cone shaped surface.

12. The method according to any one of claims 9-11, wherein drilling is used in the step of forming the front portion (111a, 111b) of said at least one coolant passageway (109).

13. The method according to any one of claims 9-11, wherein electrical discharge machining (EDM), preferably wire electrical discharge machining (WEDM) is used in the step of forming the front portion (111a, 111b) of said at least one coolant passageway (109).

## Patentansprüche

1. Werkzeugkörper (100) für ein Fräswerkzeug mit einer zentralen Drehachse (C), um die der Werkzeugkörper (100) rotierbar ist, wobei der Werkzeugkörper folgendes aufweist:
- ein vorderes Ende (101),
- ein hinteres Ende (102), das eine zentrale Aussparung (104) enthält, die so konfiguriert ist, dass sie Kühlmittel von einer Welle einer Maschine aufnimmt,
- eine Umfangsfläche (103), die sich zwischen dem vorderen Ende (101) und dem hinteren Ende (102) des Werkzeugkörpers (100) erstreckt,
- wenigstens einen in einem Übergang zwischen dem vorderen Ende (101) und der Umfangsfläche (103) gebildeten Einsatzsitz (106), in dem ein Schneideinsatz (200) stabil montiert werden kann,
- eine Spantasche (107), die vor jedem Einsatzsitz (106) bereitgestellt wird,
- ein Kühlmitteldurchlasssystem für den Durchlass von Kühlmittel von der zentralen Aussparung (104) zu jeder Spantasche (107), das wenigstens einen Kühlmitteldurchlass (109) enthält, wobei der Kühlmitteldurchlass (109) einen hinteren Teil (110) aufweist, der sich von der zentralen Aussparung (104) nach außen und nach vorne in den Werkzeugkörper (100) erstreckt, und einen vorderen Teil (111a, 111b) aufweist, der sich von dem hinteren Teil (110, 110a, 110b) und in die Spantasche (107) erstreckt, in der ein Auslass (112a, 112b) bereitgestellt ist, wobei der hintere Teil (110) des wenigstens einen Kühlmitteldurchlasses (109) breiter ist als der vordere Teil (111a, 111b) des Kühlmitteldurchlasses (109), und wobei der hintere Teil (110) eine Breite von wenigstens der doppelten Breite des vorderen Teils (111a, 111b) aufweist, **dadurch gekennzeichnet, dass** der Kühlmitteldurchlass (109) wenigstens zwei getrennte vordere Teile (111a, 111b) enthält, die sich einen gemeinsamen hinteren Teil (110) teilen und sich in dieselbe Spantasche (107) erstrecken, in der wenigstens zwei Auslässe (112a, 112b) bereitgestellt sind.

2. Werkzeugkörper nach Anspruch 1, wobei der hintere Teil (110) des wenigstens einen Kühlmitteldurchlasses (109) einen zylindrischen Hohlraum, vorzugsweise einen kreiszylindrischen Hohlraum, enthält.

3. Werkzeugkörper nach Anspruch 1 oder 2, wobei der vordere Teil (111a, 111b) des wenigstens einen Kühlmitteldurchlasses (109) eine zylindrische Leitung, vorzugsweise eine kreiszylindrische Leitung, enthält.

4. Werkzeugkörper nach einem der vorhergehenden Ansprüche, wobei sich der hintere Teil (110) des wenigstens einen Kühlmitteldurchlasses (109) wenigstens teilweise von einer Seitenwand (114) der zentralen Ausnehmung (104) aus erstreckt, wobei sich die Seitenwand (114) entlang der Rotationsachse (C) des Werkzeugkörpers (100) erstreckt.

5. Werkzeugkörper nach einem der vorhergehenden Ansprüche, wobei der hintere Abschnitt (110) des Kühlmitteldurchlasses (109) in einer Richtung des Kühlmittelflusses eine größere Ausdehnung aufweist als der vordere Abschnitt (111a, 111b) des Kühlmitteldurchlasses (109).

6. Werkzeugkörper nach einem der vorhergehenden Ansprüche, wobei der hintere Teil (110) des wenigstens einen Kühlmitteldurchlasses (109) eine Breite aufweist, die in einer Richtung des Kühlmittelflusses sukzessive abnimmt.

7. Werkzeugkörper nach einem der vorhergehenden Ansprüche, wobei der Werkzeugkörper (100) zum vorderen Ende (101) des Werkzeugkörpers (100) hin einen zunehmenden Durchmesser aufweist.

8. Fräswerkzeug, enthaltend einen Werkzeugkörper (100) nach einem der vorhergehenden Ansprüche und wenigstens einen Schneideinsatz (200), wobei der Schneideinsatz (200) in einem Einsatzsitz (106) des Werkzeugkörpers (100) lösbar befestigt ist.

9. Verfahren zur Herstellung eines Werkzeugkörpers (100) nach einem der Ansprüche 1 bis 7 aus einem Werkzeugkörperrohling, wobei das Verfahren die folgenden Schritte enthält:
- Ausbilden einer zentralen Ausnehmung in einem hinteren Ende des Werkzeugkörperrohlings,
- Ausbilden des mindestens einen Einsatzsitzes (106) und der mindestens einen Spantasche (107) in dem Werkzeugkörperrohling,
- Ausbilden des hinteren Teils (110) des wenigstens einen Kühlmitteldurchlasses (109) durch maschinelles Bearbeiten, vorzugsweise Bohren, von innerhalb der zentralen Ausnehmung aus,
- Bilden des vorderen Abschnitts (111a, 111b) des wenigstens einen Kühlmitteldurchlasses (109) durch maschinelles Bearbeiten von innerhalb der Spantasche (107).

10. Verfahren nach Anspruch 9, das ferner den Schritt enthält:
- Vor dem Ausbilden des hinteren Abschnitts (110), Formen einer Bodenfläche der zentralen Aussparung zu einer kegelförmigen Fläche, wobei der Schritt des Ausbildens des hinteren Abschnitts (110) die Verwendung der kegelförmigen Fläche als eine Stützfläche zum Stützen einer Bohrerspitze eines Bohrers, der zum Bearbeiten des hinteren Abschnitts (110) verwendet wird, umfasst.

11. Das Verfahren nach Anspruch 10, das ferner den Schritt enthält:
- Nach dem Ausbilden des hinteren Abschnitts (110) wird die konische Fläche entfernt.

12. Verfahren nach einem der Ansprüche 9 bis 11, wobei bei dem Schritt des Ausbildens des vorderen Teils (1 1 1a, 111b) des wenigstens einen Kühlmitteldurchlasses (109) gebohrt wird.

13. Verfahren nach einem der Ansprüche 9-11, bei dem Schritt des Ausbildens des vorderen Teils (111a, 111b) des wenigstens einen Kühlmitteldurchlasses (109) Funkenerosion (EDM), vorzugsweise Drahterosion (WEDM), angewendet wird.

## Revendications

1. Corps d'outil (100) destiné à un outil de fraisage présentant un axe de rotation central (C) autour duquel le corps d'outil (100) peut être entraîné en rotation, incluant :
- une extrémité avant (101),
- une extrémité arrière (102) comprenant un évidement central (104) configuré pour recevoir un réfrigérant provenant d'une broche d'une machine,
- une surface d'enveloppe (103) s'étendant entre l'extrémité avant (101) et l'extrémité arrière (102) du corps d'outil (100),
- au moins un siège de plaquette (106) dans lequel une plaquette de coupe (200) peut être montée de manière fixe, formé dans une transition entre l'extrémité avant (101) et la surface d'enveloppe (103),
- une cavité à copeaux (107) prévue devant chaque siège de plaquette (106),
- un système de passage de réfrigérant destiné au passage de réfrigérant depuis l'évidement central (104) vers chaque cavité à copeaux (107), comprenant au moins une voie de passage de réfrigérant (109), ladite voie de passage de réfrigérant (109) comprenant une partie arrière (110) s'étendant vers l'extérieur et vers l'avant jusque dans le corps d'outil (100) depuis l'évidement central (104), et une partie avant (111a, 111b) s'étendant depuis la partie arrière (110, 110a, 110b) et jusque dans la cavité à copeaux (107), dans laquelle une sortie (112a, 112b) est prévue, où la partie arrière (110) de ladite au moins une voie de passage de réfrigérant (109) est plus large que la partie avant (111a, 111b) de ladite voie de passage de réfrigérant (109), et où la partie arrière (110) présente une largeur égale à au moins le double d'une largeur de la partie avant (111a, 111b), ***caractérisé en ce* que** ladite voie de passage de réfrigérant (109) comprend au moins deux parties avant séparées (111a, 111b) partageant une partie arrière commune (110) et s'étendant jusque dans la même cavité à copeaux (107), dans laquelle au moins deux sorties (112a, 112b) sont prévues.

2. Corps d'outil selon la revendication 1, dans lequel la partie arrière (110) de ladite au moins une voie de passage de réfrigérant (109) comprend une cavité cylindrique, de préférence une cavité cylindrique circulaire.

3. Corps d'outil selon la revendication 1 ou 2, dans lequel la partie avant (111a, 111b) de ladite au moins une voie de passage de réfrigérant (109) comprend un conduit cylindrique, de préférence un conduit cylindrique circulaire.

4. Corps d'outil selon l'une quelconque des revendications précédentes, dans lequel la partie arrière (110) de ladite au moins une voie de passage de réfrigérant (109) s'étend au moins en partie depuis une paroi latérale (114) dudit évidement central (104), laquelle paroi latérale (114) s'étend le long de l'axe de rotation (C) du corps d'outil (100).

5. Corps d'outil selon l'une quelconque des revendications précédentes, dans lequel la partie arrière (110) de ladite voie de passage de réfrigérant (109) présente une étendue plus importante dans une direction d'écoulement de réfrigérant que la partie avant (111a, 111b) de ladite voie de passage de réfrigérant (109).

6. Corps d'outil selon l'une quelconque des revendications précédentes, dans lequel la partie arrière (110) de la au moins une voie de passage de réfrigérant (109) présente une largeur qui diminue successivement dans une direction d'écoulement de réfrigérant.

7. Corps d'outil selon l'une quelconque des revendications précédentes, où le corps d'outil (100) présente un diamètre croissant en direction de l'extrémité avant (101) du corps d'outil (100).

8. Outil de fraisage comprenant un corps d'outil (100) selon l'une quelconque des revendications précédentes et au moins une plaquette de coupe (200), où la plaquette de coupe (200) est montée de manière amovible dans un siège de plaquette (106) du corps d'outil (100).

9. Procédé de fabrication d'un corps d'outil (100) selon l'une quelconque des revendications 1 à 7 à partir d'une ébauche de corps d'outil, comprenant les étapes consistant à :
- former un évidement central dans une extrémité arrière de l'ébauche de corps d'outil,
- former le au moins un siège de plaquette (106) et la au moins une cavité à copeaux (107) dans ladite ébauche de corps d'outil,
- former la partie arrière (110) de ladite au moins une voie de passage de réfrigérant (109) par usinage, de préférence par perçage, depuis l'intérieur dudit évidement central,
- former la partie avant (111a, 111b) de ladite au moins une voie de passage de réfrigérant (109) par usinage depuis l'intérieur de la cavité à copeaux (107).

10. Procédé selon la revendication 9, comprenant en outre l'étape consistant à :
- avant de former ladite partie arrière (110), former une surface inférieure dudit évidement central en une surface en forme de cône, où l'étape consistant à former ladite partie arrière (110) comprend le fait d'utiliser ladite surface en forme de cône comme surface de support supportant un pointe de foret d'un foret utilisé pour usiner la partie arrière (110).

11. Procédé selon la revendication 10, comprenant en outre l'étape consistant à :
- après avoir formé ladite partie arrière (110), éliminer ladite surface en forme de cône.

12. Procédé selon l'une quelconque des revendications 9 à 11, dans lequel le perçage est utilisé lors de l'étape consistant à former la partie avant (111a, 111b) de ladite au moins une voie de passage de réfrigérant (109).

13. Procédé selon l'une quelconque des revendications 9 à 11, dans lequel un usinage par électroérosion (EDM), de préférence un usinage par électroérosion par fil (WEDM) est utilisé lors de l'étape consistant à former la partie avant (111a, 111b) de ladite au moins une voie de passage de réfrigérant (109).
